# DEMANDE DE BREVET EUROPEEN

(11) **EP 1 882 873 A1**
(43) Date de publication de la demande: **30.01.2008**
(21) Numéro de dépôt: 07012649.5
(22) Date de dépôt: 28.06.2007
(51) Int. Cl.: F16J 15/06

(54) **Procédé de mesure d'une grandeur physique dans un joint**

(30) Priorité: 28.07.2006 FR 0653167
(71) Demandeur: Carl Freudenberg KG, 69469 Weinheim (DE)
(72) Inventeur: Jeanne, Olivier, 87200 St. Junien (FR)

(57) **Abrégé**

L'objet de l'invention est un procédé de mesure d'une température dans un joint (10), caractérisé en ce que la température est conduite, sans transformation en un quelconque signal, depuis au moins une zone de mesure (12) jusqu'à au moins une zone de captage (14).

## Description

La présente invention est relative à un procédé de mesure d'une température dans un joint, notamment un joint situé au niveau de la culasse d'un moteur de véhicule.

Dans la tendance actuelle, les constructeurs automobiles cherchent de plus en plus à contrôler les différents paramètres de fonctionnement d'un moteur, que ce soit pour vérifier le bon fonctionnement de ce dernier ou que ce soit pour assurer une meilleure gestion des organes auxiliaires audit moteur.

Ces différents paramètres de fonctionnement sont établis à l'aide de mesures effectuées au coeur du moteur, près des cylindres, pistons et culasses notamment, par des capteurs ou des sondes électroniques.

Par exemple, la tendance actuelle étant de remplacer les pompes de liquide de refroidissement mécaniques par des pompes électriques, les constructeurs automobiles cherchent à connaître de façon précise et sûre la température dudit liquide de refroidissement au plus près de la chambre de combustion. L'intérêt technique de ce suivi de température est d'améliorer l'efficacité du refroidissement tout en gérant au mieux l'alimentation de la pompe électrique. Le fonctionnement de ladite pompe électrique peut ainsi être directement indexé à la température du liquide situé derrière la paroi de la chambre de combustion et cela de façon progressive grâce au traitement d'un signal analogique de température.

Etant donné les contraintes mécaniques et thermiques importantes dans un moteur à combustion, toutes les solutions permettant d'effectuer des mesures de température amènent à l'élaboration de dispositifs de mesure sophistiqués mais bien souvent trop coûteux pour équiper des véhicules de moyenne gamme.

Selon une première approche, utilisée dans de nombreux documents de l'art antérieur, les capteurs ou sondes permettant des mesures, et donc la maîtrise au mieux des paramètres de fonctionnement du moteur, sont intégrés au joint lors de la fabrication de ce dernier, et notamment à proximité du contour de la chambre de combustion.

De nombreux joints, notamment de culasse, de l'art antérieur utilisent cette première approche et proposent des solutions pour effectuer une mesure dite «directe», solutions dans lesquelles un capteur, ou une sonde, est placé directement au niveau de la zone où l'on veut effectuer la mesure d'une grandeur physique associée à un paramètre de fonctionnement du moteur. Ladite grandeur physique mesurée est directement transformée en un signal par le capteur, ou la sonde, au niveau de la zone de mesure, ledit signal étant ensuite transporté jusqu'à la périphérie extérieure du joint par des moyens appropriés, eux aussi intégrés au joint, pour être relié aux moyens de traitement et de commande.

Par exemple, le joint décrit dans le document EP048216 dispose de moyens de détection du type : capteurs piézoélectriques, piézorésistants ou capacitifs, ou bien des capteurs à fibres optiques, pour mesurer localement, notamment dans la zone périphérique d'une chambre de combustion, les variations dimensionnelles des éléments enserrant le joint.

D'une autre conception, le joint du document WO2003071119 utilise un dispositif de détection à fibre optique, une membrane permettant au dispositif de fournir un signal fonction des cycles de combustion du moteur. Ce capteur à fibre optique est protégé de l'écrasement par un tube disposé dans un logement prévu au niveau de l'épaisseur d'une feuille composant le joint. Le signal optique ainsi recueilli, image des cycles de combustion du moteur, est ensuite transformé en signal électrique pour être traité par des moyens de commande.

D'une manière légèrement différente, le joint décrit dans le document US4004472 propose des moyens permettant de mesurer la pression des gaz dans la chambre de combustion, un capteur de pression se trouvant dans un logement débouchant dans la chambre de combustion. Ledit logement est pressurisé et fermé par une membrane exposée à la pression des gaz de la chambre de combustion.

Cependant, malgré les évolutions et la miniaturisation desdits capteurs ou sondes électroniques, les dispositifs de mesure « directe » d'une grandeur physique intégrés au joint selon l'art antérieur demeurent de conceptions complexes, peu résistantes et/ou entraînant une augmentation de l'épaisseur du joint. Les joints de culasse comprenant de tels dispositifs de mesure « directe » ne répondent pas aux exigences des constructeurs automobiles et ne peuvent donc être monté en grande série sur des véhicules.

En effet, étant donné le fait qu'un joint de culasse, situé à proximité de la chambre de combustion et compressé entre le cylindre et la culasse, est un environnement difficile dans lequel lesdits capteurs ou sondes sont soumis à de nombreuses contraintes, mécaniques et thermiques, susceptibles de provoquer leur défaillance ou leur destruction, les joints intégrant lesdits capteurs ou sondes n'offrent pas une durée de vie et une résistance mécanique suffisante.

De plus, dans le cas d'une défaillance d'un capteur intégré au joint, les coûts de main d'oeuvre, correspondants au démontage/remontage des éléments enserrant ledit joint, s'avèrent rapidement très élevés en comparaison du coût dudit capteur, ou de ladite sonde, défectueux.

Selon une deuxième approche visant à se libérer des inconvénients en cas de défaillance d'un capteur ou d'une sonde intégré, le document US6682075, relatif à un joint de culasse, propose une solution dans laquelle le joint intègre un logement apte à recevoir ledit capteur où ladite sonde. De cette manière, la sonde ou le capteur étant détachable, leur remplacement ne nécessite pas un démontage/remontage des éléments enserrant le joint. De plus, le logement de réception dudit capteur, ou de ladite sonde, reliant, dans un mode de réalisation, la périphérie extérieure du joint à la zone située à proximité de la chambre de combustion, la mesure de la température peut s'effectuer à différentes distances de la chambre de combustion, le capteur pouvant se positionner à différentes profondeurs dudit logement.

Cependant, l'utilisation de cette dernière solution, étant donné les efforts de serrage et les fortes dilatations subies par les éléments enserrant un joint de culasse, ne peut être considérée comme une solution fiable, que ce soit pour la résistance à l'écrasement du logement, nécessitant obligatoirement une certaine surépaisseur, ou pour les éventuels débris ou résidus susceptibles de venir obstruer ledit logement et de gêner l'introduction du capteur ou de la sonde.

Aussi, la présente invention vise à pallier aux inconvénients de l'art antérieur en proposant un procédé de mesure « indirecte » d'une température applicable à un joint, notamment de culasse, ledit procédé n'engendrant pas de modifications du joint susceptibles d'aller à l'encontre des exigences des constructeurs automobiles et, au contraire, susceptible de contribuer à la réalisation d'un joint, notamment de culasse, répondant aux exigences de longévité et de fiabilité d'un moteur d'automobile.

Le procédé de mesure « indirecte » se définissant comme un procédé dans lequel la transformation de la température mesurée n'est pas effectuée par un capteur, ou une sonde, disposé de manière permanente ou temporaire, au niveau de la zone de mesure, les inconvénients rencontrés dans les dispositifs de l'art antérieur sont donc susceptibles d'être évités par un tel procédé, aucun capteur ou sonde n'étant placé directement au niveau de la zone où l'on veut effectuer la mesure d'une température.

A cet effet, l'invention a pour objet un procédé de mesure d'une température dans un joint, caractérisé en ce que la température est conduite, sans transformation en un quelconque signal, depuis au moins une zone de mesure jusqu'à au moins une zone de captage. L'invention a aussi pour objet un joint, notamment de culasse, adapté pour la mise en oeuvre dudit procédé.

D'autres caractéristiques et avantages ressortiront de la description qui va suivre de l'invention, description donnée à titre d'exemple uniquement, en regard des dessins annexés sur lesquels :
- la figure 1 représente un joint selon un premier mode de réalisation de l'invention ;
- la figure 2 représente un joint selon un deuxième mode de réalisation de l'invention.

Le procédé selon l'invention se propose d'effectuer une mesure dite « indirecte » d'une température, l'utilité d'un tel procédé étant de permettre la réalisation d'une mesure d'une température dans des environnements difficiles, tels que les moteurs à combustion par exemple, de manière fiable et avec la possibilité d'obtenir une longue durée de vie du joint mettant en oeuvre ce procédé.

On appelle environnements difficiles toutes les zones, notamment les zones à étanchéifier d'un moteur à combustion, dans lesquelles un capteur, une sonde ou un dispositif de mesure « directe » selon l'art antérieur est susceptible de subir des contraintes mécaniques, thermiques, ou vibratoires, mais où la mesure d'une température se révèle être nécessaire à l'amélioration de certains paramètres de fonctionnement du dispositif équipé d'un joint 10 mettant en oeuvre ledit procédé, notamment dans le cas d'un moteur à combustion par exemple.

Lesdites contraintes étant à même de détruire des composants, sondes ou capteurs, mécaniques ou électroniques, l'invention évite l'utilisation desdits composants dans la zone de mesure 12 correspondant à un environnement difficile et les déplace dans une zone dite zone de captage 14 où les conditions sont plus favorables à leur disposition et surtout à leur durée de vie.

Pour conduire la température depuis la zone de mesure 12 jusqu'à la zone de captage 14, le procédé selon l'invention utilise un transmetteur 16. Ce transmetteur 16 est un élément insensible, ou du moins suffisamment résistant, aux contraintes de l'environnement dans lequel s'effectue la mesure, et a la propriété caractéristique de conduire, sans transformation en un quelconque signal et avec un minimum de pertes, la température à mesurer depuis la zone de mesure 12 jusqu'à la zone de captage 14.

Ce transmetteur 16 peut être un solide, un liquide, un gaz, ou bien changer au moins une fois de phase entre la zone de mesure 12 et la zone de captage 14.

La description est maintenant faite pour un procédé mis en application à un joint 10, notamment de culasse, cependant toute application à un autre dispositif disposé dans un environnement difficile est couverte par l'invention.

Donc, suivant le procédé faisant l'ob jet de la présente invention, la température à mesurer est conduite d'un point à un autre du joint 10, c'est à dire depuis la zone de mesure 12, située dans ledit environnement dit difficile, jusqu'à une zone de captage 14, où les conditions sont plus favorables à la disposition et à la durée de vie de moyens de transformation 18, notamment des transducteurs électroniques, électriques ou mécaniques susceptibles de transformer ladite température en un signal, notamment électrique ou mécanique, exploitable par des moyens de traitement.

Un joint 10 pour la mise en oeuvre dudit procédé de mesure d'une température comprend au moins une feuille 22, notamment une tôle, au moins une ouverture 24, notamment l'ouverture correspondant à une chambre de combustion dans le cas d'un joint de culasse, ainsi qu'au moins un transmetteur 16 conduisant la température à mesurer depuis la zone de mesure 12 jusqu'à la zone de captage 14.

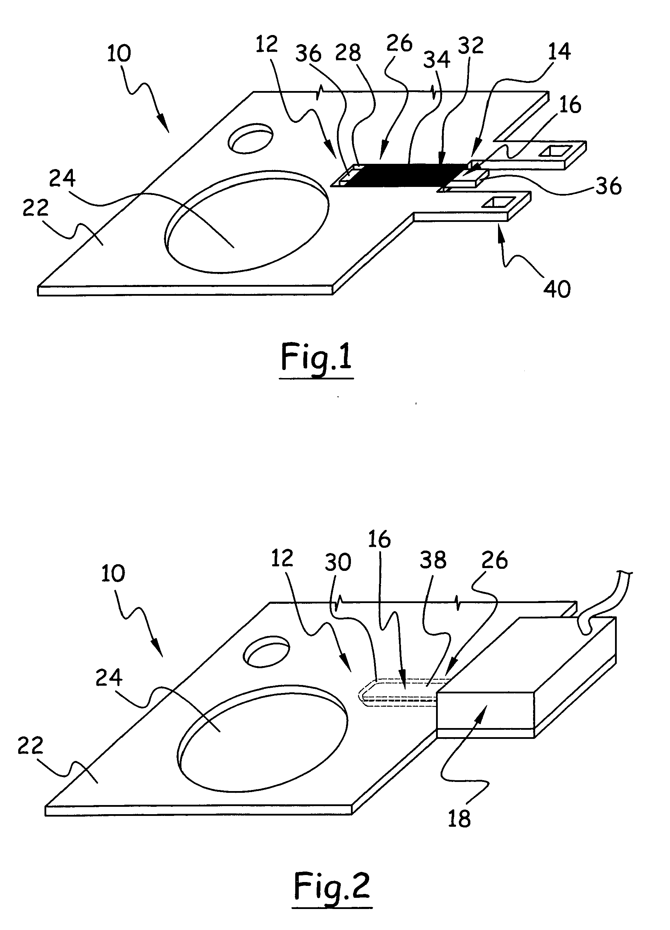

Pour ce faire, le joint 10 dispose au niveau d'au moins une feuille 22, notamment une tôle, d'au moins un logement 26 pouvant prendre la forme d'une rainure 28, comme illustré en figure 1, ou d'un canal 30, comme illustré en figure 2, dans lequel va se situer au moins un transmetteur 16, placé de manière définitive dans le joint.

Ce logement 26, reliant la zone de mesure 12 à la zone de captage 14, est adapté pour recevoir au moins un transmetteur 16 quel que soit son (ou ses) état(s), et peut être équipé de moyens de limitation 32 des pertes induites par les déperditions, aussi infimes soit-elles, subies par la température à mesurer sur la longueur dudit transmetteur 16.

Ce logement 26 peut être un canal 30 réalisé dans le joint 10 comme le décrit la demande de brevet FR0652836.

Les moyens de limitation 32 des pertes subies par la température transmise servent premièrement, à isoler le transmetteur 16 entre la zone de mesure 12 et la zone de captage 14 de l'environnement extérieur, comme par exemple les éléments enserrant le joint 10, ledit environnement extérieur étant susceptible de modifier la valeur de la température durant sa conduite entre lesdites zones, et deuxièmement à étancher l'interface entre le transmetteur 16 et la structure même du joint 10.

Indubitablement, et malgré les moyens de limitation 32 des pertes, il existe des différences entre la température au niveau de la zone de mesure 12 et la température transmise au niveau de la zone de captage 14, mais il est très simple avec les moyens de traitement ou de transformation 18 d'apporter une correction instantanée à la valeur déduite de la température transmise grâce à des algorithmes.

Selon un premier mode de réalisation d'un joint 10 mettant en oeuvre le procédé de mesure selon l'invention, le transmetteur 16 permet de conduire une température depuis la zone de mesure 12 jusqu'à la zone de captage 14. Dans ce mode de réalisation, le transmetteur 16 est un élément thermiquement conducteur, notamment réalisé dans un matériau thermiquement bon conducteur tel que le cuivre, l'aluminium, l'argent ou le carbone, et les moyens de limitation 32 des pertes sont réalisés par un revêtement 34, ou une enveloppe, en un matériau thermiquement isolant, tel que des élastomères renforcés avec des fibres ou de la céramique, déposé sur le matériau thermiquement conducteur entre la zone de mesure 12 et la zone de captage 14. Les extrémités 36 du transmetteur sont laissées sans revêtement 34 isolant afin de pouvoir entrer en contact thermique avec la zone de mesure 12, notamment située à proximité d'une chambre de combustion, et la zone de captage 14 et/ou les moyens de transformation 18.

Selon un deuxième mode de réalisation d'un joint 10 mettant en oeuvre le procédé selon l'invention, le transmetteur 16 permet aussi de conduire une température depuis la zone de mesure 12 jusqu'à la zone de captage 14. Dans ce mode de réalisation, le transmetteur 16 est un caloduc 38 et les moyens de limitation 32 des pertes sont réalisés par un revêtement 34, ou une enveloppe, en un matériau thermiquement isolant, tel que des élastomères renforcés avec des fibres ou de la céramique, déposé sur la paroi intérieure du logement 26 entre la zone de mesure 12 et la zone de captage 14. Un caloduc 38, généralement utilisé comme un dispositif de transfert de chaleur à haute performance car ayant une capacité de transmission de chaleur pouvant être 10000 fois supérieure à celle du cuivre ou de l'argent, se présente sous la forme d'un cylindre creux rempli d'un liquide pressurisé et dont le principe de fonctionnement repose sur le transfert thermique par changement de phase dudit liquide. L'une des extrémités du caloduc 38 entre en contact thermique avec la zone de mesure 12 au niveau de laquelle ledit liquide se vaporise, et l'autre extrémité avec la zone de captage 14 et/ou les moyens de transformation 18 au niveau desquels le liquide se reliquéf ie, libérant la chaleur et transmettant ainsi la température.

Les moyens de traitement ne sont pas plus détaillés ni représentés sur les figures car ils sont connus de l'homme du métier et ne font pas l'objet de cette invention.

Toutefois, pour citer un exemple d'application, dans le cas d'une mesure de température du liquide de refroidissement d'un moteur à combustion, ces moyens de traitement vont pouvoir indexer de manière très précise sur ladite température, comme le veut la tendance actuelle dans le secteur automobile, le fonctionnement de la pompe électrique assurant la circulation dudit liquide, et ainsi, fournir une meilleure gestion de l'énergie électrique.

Avantageusement, le joint 10 dispose au niveau de la zone de captage 14 de moyens de maintien 40, notamment élastiques, permettant d'assurer une connexion efficace et fiable entre le transmetteur 16 et les moyens de transformation 18 au niveau de la zone de captage 14. De façon à éviter au maximum les pertes, de la même manière que les moyens de limitation 32 des pertes dues au transmetteur 16, ces moyens de maintien 40 assurent un contact, notamment mécanique ou thermique entre le transmetteur 16 et les moyens de transformation 18, susceptible d'assurer une conduction optimale de la température avant transformation en un signal exploitable par les moyens de traitement.

Ces moyens de maintien 40 peuvent permettre une fixation définitive, par exemple par emboîtement, des moyens de transformation 18 au niveau de la zone de captage 12 dans le cas d'une mesure permanente. Ou alors, ils peuvent permettre de détacher lesdits moyens de transformation 18 dans le cas d'une mesure temporaire, par exemple pour la réalisation d'un diagnostic en temps réel de différents paramètres de fonctionnement d'un dispositif équipé d'un joint 10 mettant en oeuvre le procédé selon l'invention.

Etant donné les nombreuses zones de mesures 12 possibles et les contraintes d'encombrement généralement exigées au niveau d'un joint, plusieurs transmetteurs 16 sont susceptibles de partager un même logement 26, lesdits logements 26 unitaires étant susceptibles de se regrouper pour n'en former qu'un multiple, et plusieurs transmetteurs 16 peuvent par ce biais se rejoindre en une même zone de captage 14, les moyens de transformation 18 disposant d'autant d'entrées que nécessaires pour traiter les différentes températures transmises simultanément.

## Revendications

1. Procédé de mesure d'une température dans un joint (10), **caractérisé en ce que** la température est conduite, sans transformation en un quelconque signal, depuis au moins une zone de mesure (12) jusqu'à au moins une zone de captage (14).

2. Joint (10), notamment de culasse, pour la mise en oeuvre du procédé de mesure selon la revendication 1, **caractérisé en ce qu'**il comprend au moins un transmetteur (16) conduisant la température sans transformation en un quelconque signal depuis au moins une zone de mesure (12) jusqu'à au moins une zone de captage (14).

3. Joint selon la revendication 2, ledit joint (10) comprenant au moins une feuille (22), notamment une tôle, **caractérisé en ce que** le transmetteur (16) est placé de manière définitive dans un logement (26) prévu à cet effet au niveau d'au moins une feuille (22), notamment une tôle, du joint (10).

4. Joint (10) selon l'une des revendications 2 ou 3, **caractérisé en ce que** le transmetteur (16) est en un matériau susceptible de conduire une température de la zone de mesure (12) à la zone de captage (14) avec le minimum de pertes.

5. Joint (10) selon l'une des revendications 2 à 4, **caractérisé en ce que** le transmetteur peut être un solide, un liquide, un gaz, ou bien changer au moins une fois de phase entre la zone de mesure (12) et la zone de captage (14).

6. Joint (10) selon l'une des revendications 2 à 5, **caractérisé en ce que** la zone de captage (14) est équipée de moyens de transformation (18) de la température transmise en un signal exploitable par des moyens de traitement.

7. Joint (10) selon l'une des revendications 2 à 6, **caractérisé en ce que** la zone de captage (14) comprend des moyens de maintien (40), notamment élastiques, des moyens de transformation (18).

8. Joint (10) selon l'une des revendications 2 à 7, **caractérisé en ce que** le transmetteur (16) est un élément thermiquement conducteur, notamment en cuivre, aluminium, argent ou carbone, placé dans le joint (10) et isolé thermiquement.

9. Joint (10) selon l'une des revendications 2 à 7, **caractérisé en ce que** le transmetteur (16) est un caloduc placé dans le joint (10) et isolé thermiquement.

10. Joint (10) selon l'une des revendications 2 à 9, **caractérisé en ce que** la zone de mesure (12) est située à proximité d'au moins une ouverture (24) dans le joint (10), notamment une ouverture (24) correspondant à une chambre de combustion.
